# EUROPEAN PATENT APPLICATION

(11) **EP 3 160 080 A1**
(43) Date of publication of application: **26.04.2017**
(21) Application number: 14895213.8
(22) Date of filing: 23.10.2014
(51) Int. Cl.: H04L 12/24, H04L 29/06

(54) **METHOD, APPARATUS AND SYSTEM FOR CONFIGURING QUALITY OF SERVICE (QOS) PARAMETERS**

(30) Priority: 20.06.2014 CN 201410279782
(71) Applicant: ZTE Corporation, Shenzhen, Guangdong 518057 (CN)
(72) Inventor: XU, Aijun, Shenzhen Guangdong 518057 (CN)
(74) Representative: Potter Clarkson LLP
(86) International application number: PCT/CN2014/089350
(87) International publication number: WO 2015/192572

(57) **Abstract**

The present invention provides a method, apparatus and system for configuring quality of service (QoS) parameters. The method comprises: receiving a data packet sent by a terminal device, the data packet carrying a device type and a device address of the terminal device; determining a class of service of the terminal device according to the device type and a preset correspondence between device types and classes of services; and configuring QoS parameters of the terminal device according to the device address and the class of service. By solving the problem in the related art that QoS priority cannot be ensured in QoS parameter configuration, the present disclosure achieves the effect of ensuring QoS priority.

## Description

### TECHNICAL FIELD

The present disclosure relates to communication technologies, and more particularly, to a method, device and system for configuring a Quality of Service (QoS) parameter.

### BACKGROUND

With popularization of devices such as wireless routers, Access Points (APs), Power Line Communication Modems (PLC Modems) and the like, it becomes more complicated to arrange home networks. Also, home networks are capable of providing many services, such as surfing on the Internet, video, voice, downloading, game and the like, and these services impose different requirements on Quality of Service (QoS), for example, band width, delay, and the like. If a home network device cannot reasonably meet QoS, a jam may occur in a home network. For example, when a person is downloading files, video services may become stuck or may stop; when a person is watching videos, disconnection from games may occur. Therefore, QoS of home networks has become a hot point in home network technologies.

The QoS process generally includes classifying, policing, marking, queuing, scheduling, shaping and the like. The classifying function which is the first step in the QoS process occurs in a stage when input messages are received at a port. Specifically, by the QoS process, these messages are classified into corresponding data flows each of which is represented by a Class of Service (Cos) value according to a trust policy or contents of each message, so as to ensure the QoS priority of a particular data flow of messages.

There are many bases for classifying, and the common bases for classifying include: Transmission Control Protocol (TCP) and User Datagram Protocol (UDP) Port Number, IP address or Media Access Control (MAC) address, and physical port number.

### (1) TCP and UDP Port Number

Most applications may employ a fixed well-known TCP or UDP port to communicate. For example, HTTP employs the TCP Port 80, Real Time Stream Protocol (RTSP) employs the TCP Port 554. The CoS parameters of these data flows may be configured at network devices according to the well-known port numbers to ensure the QoS of relevant services. The disadvantage of this method is that if an application program has an unfixed port number, the method cannot configure the port number and thereby cannot ensure the priority. In addition, one application may use a plurality of port numbers, and the workload for configuration is relatively large.

### (2) IP address and MAC address

Each of network devices has its own IP/MAC address, and configuring a QoS priority for a specific IP/MAC address may ensure the priority of all data flows of the device. The disadvantage of this method is that the administrator has to manually configure a fixed IP/MAC address at a network device and fix the IP/MAC address of a terminal device. If the terminal device employs DHCP to obtain an IP address, the IP address may change dynamically after the terminal device is restarted. If a device has been damaged and is replaced by a new one, the MAC address may be changed as well. In the two cases, the pre-configured parameters cannot play their roles.

### (3) Physical Port Number

Similarly with source IP addresses, the physical port number of a network device may correspond to a substantial terminal device, and this is the simplest form of classification. In a home gateway formulated by China Telecom, the second Ethernet port is normally set as a Set Top Box (STB) port and the priority of data at this port is ensured. The disadvantage of this method is that a user has to connect a specific device to a particular physical port and incorrect connections cannot ensure the priority.

There is no effective solution in related arts to solve the problem that configuration of QoS parameters cannot ensure the QoS priority.

### SUMMARY

The present disclosure provides a method, device and system for configuring a QoS parameter to at least solve the problem in related arts that configuration of QoS parameters cannot ensure the QoS priority.

According to an aspect of the present disclosure, there is provided a method for configuring a QoS parameter, including:
receiving a data packet sent from a terminal device, wherein the data packet carries a device type and a device address of the terminal device; and
determining a class of service corresponding to the terminal device according to the device type and a preset correspondence between device types and classes of services; and
configuring a QoS parameter corresponding to the terminal device according to the device address and the class of service.

According to an embodiment, the data packet includes a Dynamic Host Configuration Protocol Discovery (DHCP Discovery) data packet.

According to an embodiment, the device address includes a Media Access Control (MAC) address of the terminal device.

According to an embodiment, a source MAC address in the data packet carries the MAC address of the terminal device, and an Option 60 field in the data packet carries the device type which is configured to identify the terminal device.

According to an embodiment, the device type includes at least one of a Set Top Box (STB), an IP camera, an IP phone, a computer, an iPad; and/or the class of service includes at least one of surfing on the Internet, video, voice, downloading, and game.

According to an embodiment, the QoS parameter includes a QoS priority parameter.

According to an embodiment, the method is applied in a home network device.

According to another aspect of the present disclosure, there is provided a device for configuring a QoS parameter, including:
a receiving module configured to receive a data packet sent from a terminal device, wherein the data packet carries a device type and a device address of the terminal device;
a determination module configured to determine a class of service corresponding to the terminal device according to the device address and the preset correspondence between device types and classes of services; and
a configuration module configured to configure a QoS parameter corresponding to the terminal device according to the device address and the class of service.

According to another aspect of the present disclosure, there is provided a system for configuring a QoS parameter, including:
a network device including the above device for configuring a QoS parameter; and
a terminal device configured to send the data packet.

According to an embodiment, the network device includes a DHCP Server which is configured to receive the data packet.

In the technical solutions provided by the present disclosure, a data packet sent from a terminal device is received, wherein the data packet carries a device type and a device address of the terminal device; a class of service corresponding to the terminal device is determined according to the device type and a preset correspondence between device types and classes of services; and a QoS parameter corresponding to the terminal device is configured to according to the device address and the class of service. In this way, the problem in related arts that configuration of QoS parameters cannot ensure the QoS priority can be solved, and thereby QoS priority can be guaranteed.

### BRIEF DESCRIPTION OF THE DRAWINGS

Fig. 1 is a flow chart of a method for configuring a QoS parameter according to an embodiment of the present disclosure;
Fig. 2 is a block diagram of a device for configuring a QoS parameter according to an embodiment of the present disclosure;
Fig. 3 is a block diagram of a system for configuring a QoS parameter according to an embodiment of the present disclosure;
Fig. 4 is a block diagram of another system for configuring a QoS parameter according to an embodiment of the present disclosure;
Fig. 5 is a block diagram illustratively showing network arrangement according to an embodiment of the present disclosure; and
Fig. 6 is a flow chart for implementing DHCP according to an embodiment of the present disclosure.

### DETAILED DESCRIPTION

Hereinafter, the present disclosure will be described in detail with reference to the accompanying drawings and embodiments of the present disclosure. It should be noted that in the present application, embodiments and the features of the embodiments could be combined in any appropriate way if they are not conflicting with each other.

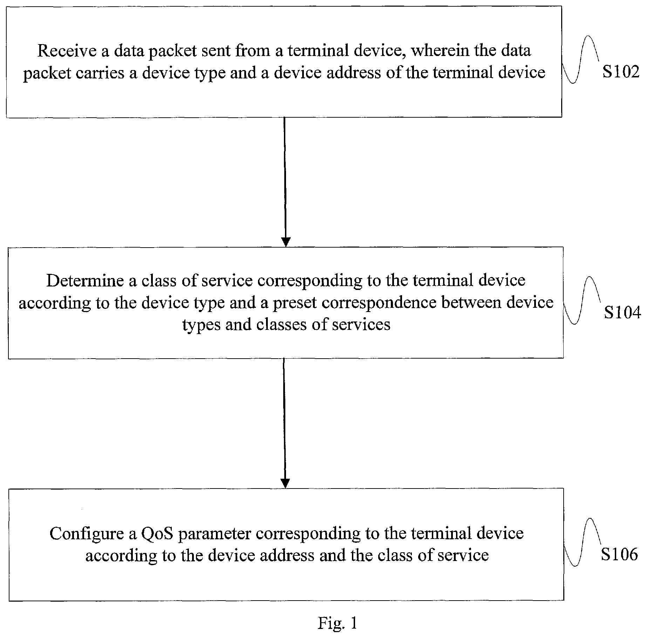

An embodiment of the present disclosure provides a method for configuring a QoS parameter. Fig.1 is a flow chart of a method for configuring a QoS parameter according to an embodiment of the present disclosure. As shown in Fig.1, the method includes the following steps.

In step S102, a data packet sent from a terminal device is received. The data packet carries a device type and a device address of the terminal device.

In step S104, a class of service corresponding to the terminal device is determined according to the device type and a preset correspondence between device types and classes of services.

In step S106, a QoS parameter corresponding to the terminal device is configured according to the device address and the class of service.

In this embodiment, a class of service corresponding to a terminal device is determined according to a received device type sent from the terminal device and a preset correspondence between device types and classes of services; and a QoS parameters corresponding to the terminal device is configured to according to a device address and the determined class of service. In this way, the technical solution provided by the embodiment can solve the problem in related arts that configuration of QoS parameters cannot ensure the QoS priority can be solved, and thereby QoS priority can be guaranteed.

In another embodiment, the data packet may further include a Dynamic Host Configuration Protocol Discovery (DHCP Discovery) data packet. The terminal device can send various data packets to a network device, and if the terminal device sends a DHCP Discovery data packet, a DHCP server has to be provided at the network device, and the DHCP server can provide IP address for the terminal device and configure parameters for the network device. Thus, according to an exemplary embodiment, the terminal device may send DHCP Discovery data packet(s).

In another embodiment, the device address carried by the data packet may be a MAC address of the terminal device. A device address may be diverse, for example the device address may be a IP address. However, IP address and the like of a terminal device may be changed while the MAC address of each terminal device is unique across the world. Therefore, it is better to use a MAC address to identify a terminal device.

There are various ways for a data packet to carry the device type and the device address of the terminal device. According to an exemplary embodiment, a source MAC address in the data packet carries the MAC address of the terminal device and an Option 60 field in the data packet carries the device type which is configured to identify the terminal device. In this way, various information with respect to the terminal device carried in the data packet can be parsed faster.

The device type may be diverse. According to an exemplary embodiment, the device type may include a Set Top Box (STB), an IP camera, an IP phone, a computer, an iPad and the like. Rather, the device type is not limited to the above listed devices, and other terminals or mobile terminals are also possible.

The class of service may be diverse. According to an exemplary embodiment, the class of service may include surfing on the Internet, video, voice, downloading, game and the like. Also, the class of service is not limited to the above listed classes, and other service classes are also possible.

Additionally, the QoS parameter may be diverse as well. According to an exemplary embodiment, the QoS parameter may include a QoS priority parameter. By configuring a QoS priority parameter corresponding to a terminal device, the QoS priority corresponding to the terminal device can be guaranteed.

The above methods for configuring a QoS parameter may be applied in many scenarios. For example, the methods may be applied in a home network device. For a home network, there is no network administrator and terminal devices of different classes reside in the network, and thus the above methods can produce more clear effects when applied in the home network configuration scenario.

In an embodiment of the present disclosure, there is provided a device for configuring a QoS parameter, which is used to implement the above exemplary embodiments. Details regarding the device can be found in the above description with respect to the methods, and repeated descriptions are omitted there. As used herein, the term "module" may be a combination of software and/or hardware for realizing preset functions. Although the device described with reference to the following embodiments is implemented by software, hardware or a combination of software and hardware can be possible and conceived.

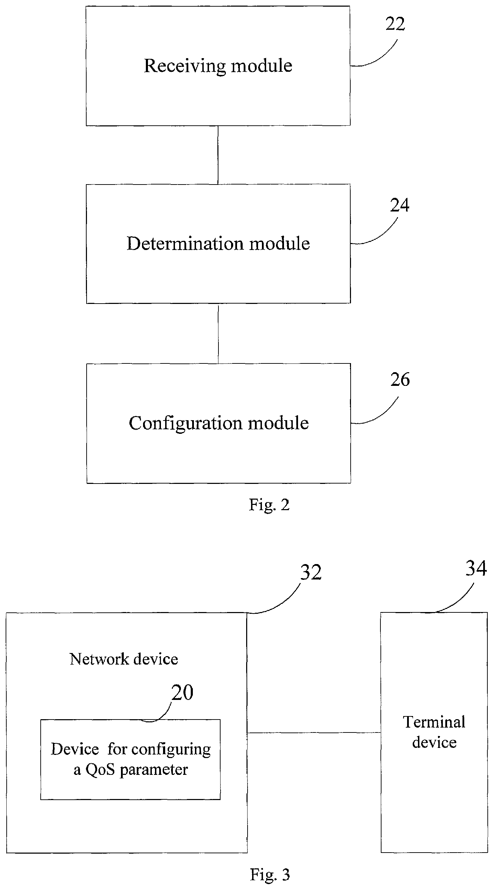

Fig. 2 is a block diagram of a device for configuring a QoS parameter according to an embodiment of the present disclosure. As shown in Fig. 2, the device 20 includes a receiving module 22, a determination module 24 and a configuration module 26.

The receiving module 22 is configured to receive a data packet sent from a terminal device. The data packet carries a device type and a device address of the terminal device.

The determination module 24 is configured to determine a class of service corresponding to the terminal device according to the device address and a preset correspondence between device types and classes of services.

The configuration module 26 is configured to configure QoS parameter corresponding to the terminal device according to the device address and the class of service.

In an embodiment of the present disclosure, there is further provided a system for configuring a QoS parameter. Fig.3 is a block diagram of a system for configuring a QoS parameter according to an embodiment of the present disclosure. As shown in Fig.3, the system includes: a network device 32 and a terminal device 34.

The network device 32 includes the device 20 for configuring a QoS parameter as shown in Fig. 2.

The terminal device 32 is configured to send a data packet.

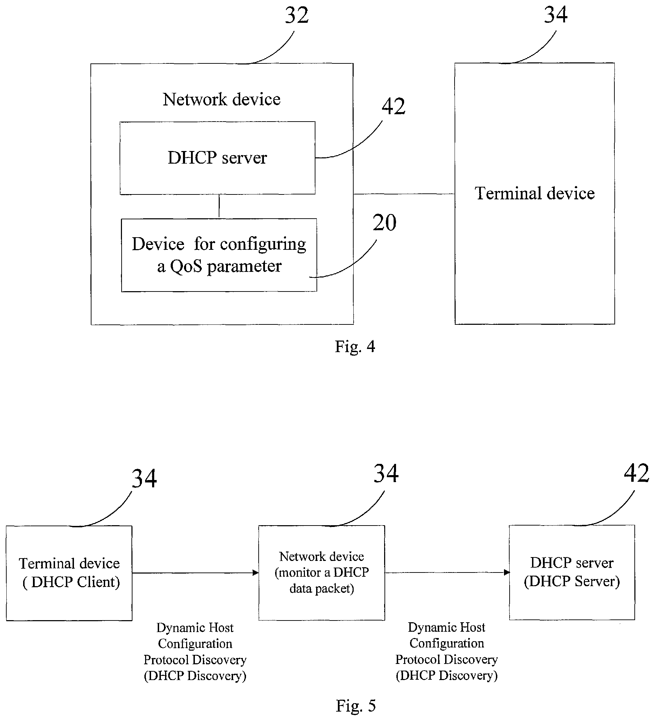

Fig. 4 is a block diagram of another system for configuring a QoS parameter according to an embodiment of the present disclosure. As shown in Fig.4, the network device 32 further includes a DHCP Server 42 which is configured to receive the data packet.

In order to make the technical solutions and implementations of the present disclosure more clear, the specific implementation will be described in detail with reference to an exemplary embodiment.

Fig. 5 is a block diagram illustratively showing network arrangement according to an exemplary embodiment of the present disclosure. As shown in Fig. 5, the network includes a terminal device 34, a network device 32 and a DHCP Server 42.

According to an exemplary embodiment, in a home network, the DHCP Server may be built in the network device.

Table 1 is a correspondence table between preset device types and classes of services (CoS) in a network device.

**Table 1**

| Number | Device Type | Class of Service (COS) |
|---|---|---|
| 1 | Device Type 1 | CoS value (1-7) |
| 2 | Device Type 2 | CoS value (1-7) |
| 3 | Device Type 3 | CoS value (1-7) |
| 4 | Device Type 4 | CoS value (1-7) |
| 5 | ··· | ··· |

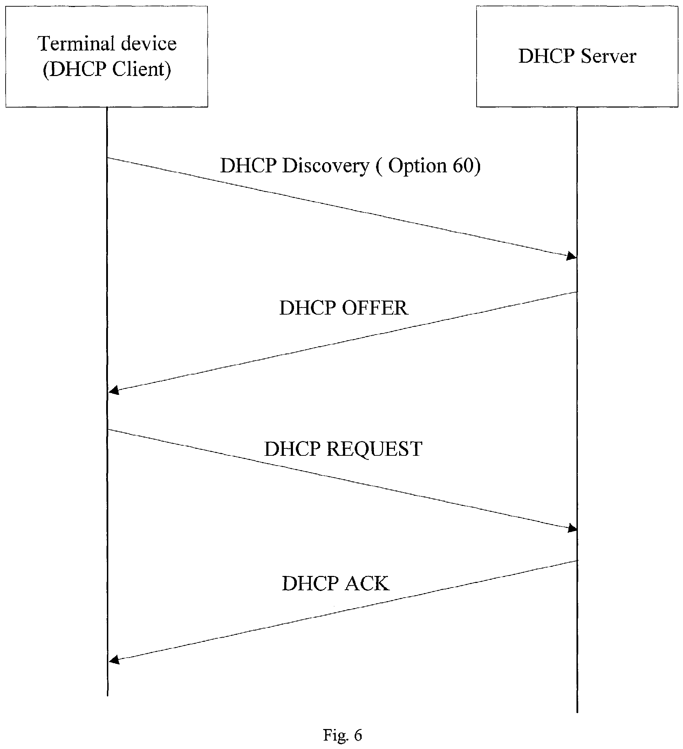

Fig.6 is a flow chart for implementing DHCP according to an embodiment of the present disclosure. As shown in Fig.6, when a terminal device is started, an IP address is obtained by the DHCP protocol. The first step in the DHCP procedure is to send a DHCP Discovery data packet, wherein a source MAC address of the data packet is the MAC address of the terminal device, and an Option 60 field (the format is shown in table 2) in the data packet is configured to identify the class and configurations of the vendor of the terminal device.

**Table 2**

| Code (one byte) | Len (one byte) | Vendor class Identifier (n bytes) - Device Type | | |
|---|---|---|---|---|
| 60 | N | i1 | i2 | ······ |

The network device listens a DHCP Discovery data packet, and extracts the device type as well as the source MAC address of the terminal device in the Option 60 field, and records them into a correspondence table about device type/MAC address, as shown in Table 3:

**Table 3**

| Number | Device Type | MAC |
|---|---|---|
| 1 | Device Type 1 | MAC address |
| 2 | ··· | ··· |

By correlating Table 1 and Table 3, a correspondence between MAC addresses and Classes of Services (CoS) may be obtained. A network device may give a corresponding QoS priority to traffic corresponding to a particular MAC address so as to guarantee the Qos corresponding to a particular device type.

Hereinafter, an exemplary embodiment will be described in detail below.

A correspondence between device types and CoSs which is preset in a home gateway is shown in Table 4.

**Table 4**

| Number | Device Type | Class of Service (CoS) |
|---|---|---|
| 1 | STB (Set Top Box) | 6 |
| 2 | IP Camera | 6 |
| 3 | IP phone | 7 |
| 4 | PC | 1 |

A STB whose MAC address is 00:11:22:33:44:55 is powered on and an IP address is obtained by the DHCP protocol. The STB sends a DHCP Discovery data packet whose Option 60 field is 'STB'.

The home gateway listens the DHCP Discovery data packet, and captures the device type (that is identified in the Optional 60 field) as well as the source MAC address of the terminal device, and records them into a table about device type/MAC address, as shown in Table 5:

**Table 5**

| Number | Device Type | MAC |
|---|---|---|
| 1 | STB | 00:11:22:33:44:55 |

By correlating Tables 4 and 5, the network gateway can figure out that the CoS of the device whose MAC address is 00:11:22:33:44:55 is 6. And then, the home gateway executes a QoS guarantee corresponding to CoS6 for the STB.

Obviously, one of ordinary skilled in the art should understand that the above modules or steps in the present disclosure may be realized by a general computing device, and they may be integrated in a single computing device, or may be distributed over a network consisting of a plurality of calculating devices. As an example, the modules and steps could be realized by program code which is executable by a calculating device such that they could be stored in a storage device and executed by a computing device. In some cases, the shown or described steps could be executed by a sequence which is different from the sequence described herein, or the modules or steps may be made into a plurality of corresponding integrated circuits, or some or all of the modules or steps may be made into a single integrated circuits module to implement the technical solutions of the present disclosure. Thus, the present disclosure is not limited to any specific combinations of hardware and software.

The above described embodiments are illustrative but not for limiting the scope of the present disclosure. One of ordinary skill in this art may make various changes and modifications. Any modification, equivalent replacement, and improvements within the spirit and principle of the present disclosure should fall within the scope of the present disclsoure.

### Industrial Applicability

As described above, the foregoing exemplary embodiments solve the problem in related arts that configuration of QoS parameters cannot ensure the QoS priority, and thereby QoS priority can be guaranteed.

## Claims

1. A method for configuring a Quality of Service (QoS) parameter, comprising:
receiving a data packet sent from a terminal device, wherein the data packet carries a device type and a device address of the terminal device;
determining a class of service corresponding to the terminal device according to the device type and a preset correspondence between device types and classes of services; and
configuring a QoS parameter corresponding to the terminal device according to the device address and the class of service.

2. The method according to claim 1, wherein the data packet comprises a Dynamic Host Configuration Protocol Discovery (DHCP Discovery) data packet.

3. The method according to claim 2, wherein the device address comprises a Media Access Control (MAC) address of the terminal device.

4. The method according to claim 3, wherein a source MAC address in the data packet carries the MAC address of the terminal device, and an Option 60 field in the data packet carries the device type which is configured to identify the terminal device.

5. The method according to claim 1, wherein:
the device type comprises at least one of a Set Top Box (STB), an IP camera, IP phone, a computer, an iPad; and/or
the class of service comprises at least one of surfing the Internet, video, voice, downloading, and game.

6. The method according to claim 1, wherein the QoS parameter comprises a QoS priority parameter.

7. The method according to any one of claims 1 to 6, wherein the method is applied in a home network device.

8. A device for configuring a Quality of Service (QoS) parameter, comprising:
a receiving module configured to receive a data packet sent from a terminal device, wherein the data packet carries a device type and a device address of the terminal device;
a determination module configured to determine a class of service corresponding to the terminal device according to the device address and the preset correspondence between device types and classes of services; and
a configuration module configured to configure a QoS parameter corresponding to the terminal device according to the device address and the class of service.

9. A system for configuring a Quality of Service (QoS) parameter, comprising:
a network device comprising the device for configuring a QoS parameter according to claim 8; and
a terminal device configured to send the data packet.

10. The system according to claim 9, wherein the network device further comprises a Dynamic Host Configuration Protocol (DHCP) Server which is configured to receive the data packet.
